# EUROPÄISCHE PATENTSCHRIFT

(11) **EP 2 192 457 B1**
(45) Veröffentlichungstag und Bekanntmachung des Hinweises auf die Patenterteilung: **14.08.2013**
(21) Anmeldenummer: 08020698.0
(22) Anmeldetag: 28.11.2008
(51) Int. Cl.: G05B 19/042, G05B 19/418

(54) **Automatisierungskomponente für eine industrielle Automatisierungsanordnung und Verfahren zur Aktivierung eines Betriebszustandes**
Automation components for an industrial automation arrangement and method for activating an operating status
Elément d'automatisation pour une installation d'automatisation industrielle et procédé d'activation d'un état de fonctionnement

(43) Veröffentlichungstag der Anmeldung: 02.06.2010
(73) Patentinhaber: Siemens Aktiengesellschaft, 80333 München (DE)
(72) Erfinder: August, Joachim, 90482 Nürnberg (DE); Brousek, Norbert, 90766 Fürth (DE); Jöhnssen, Oliver, 91058 Erlangen (DE); Ohlmann, Joachim, 91074 Herzogenaurach (DE)

(56) Entgegenhaltungen:
- EP-A- 0 620 631
- EP-A- 1 058 175
- US-A1- 2002 097 031

## Beschreibung

Die Erfindung betrifft eine Automatisierungskomponente für eine industrielle Automatisierungsanordnung gemäß dem Oberbegriff des Patentanspruchs 1, und ein Verfahren zur Aktivierung eines Betriebszustandes einer Automatisierungskomponente gemäß dem Oberbegriff des Patentanspruchs 13.

Industrielle Automatisierungsanordnungen bestehen regelmäßig aus einer Vielzahl von Automatisierungskomponenten, welche über ein Datennetz, oft ein Feldbussystem, miteinander verbunden sind. Die Automatisierungskomponenten umfassen beispielsweise Sensoren und Aktoren, wobei insbesondere die letztgenannten Aktoren der Steuerung von industriellen Prozessen, Teil-Prozessen von industriellen Prozessen, Produktionsanlagen o.ä. dienen. Zu den Automatisierungskomponenten gehören auch Steuerungseinrichtungen, beispielsweise CPU's und Controller, welche programmgesteuert zur Verarbeitung der von den Sensoren erfassten Signale dienen und die durch Ansteuerung der Aktoren eine Produktionsanlage oder einen anderen Prozess bzw. Teil-Prozess steuern. Weitere, zentrale Komponenten einer industriellen Automatisierungsanordnung sind beispielsweise übergeordnete Steuerungen, z.B. sog. "MES-Systeme" (MES = Manufacturing Execution System), zentrale Stromversorgungen und Energiemanagementsysteme, Beobachtungs- und Bedienarbeitsplätze, Datenbanken, Kommunikationsmittel, Gateways usw..

Es ist eine zentrale Aufgabe bei der Steuerung einer industriellen Fertigung bzw. eines industriellen Prozesses, möglichst ökonomisch mit den zur Verfügung stehenden Ressourcen umzugehen, insbesondere die Aufnahme an (zumeist elektrischer) Energie zu minimieren. So ist es beispielsweise möglich, zeitweise nicht benötigte Anlagenteile über die entsprechenden Automatisierungskomponenten abzuschalten bzw. in einen Bereitschaftsmodus ("Standby") zu versetzen. Das kann beispielsweise manuell oder zeitgesteuert in Betriebspausen, nachts oder an Sonn-/Feiertagen geschehen.

Aus der EP 1 058 175 A2 - Nulman "Semiconductor Processing Techniques" sind Automatisierungseinrichtungen bekannt, die zum Umschalten der Betriebsmodi eines damit gesteuerten Fertigungsprozesses und zur dementsprechenden Beeinflussung der Energieaufnahme in der Lage sind.

Die Druckschrift US 2002/097031 A1 - Warren et al. "Variable Power Control for Process Control Instruments" zeigt eine Steuerungseinrichtung zur Regelung der Energieversorgung von Feldgeräten in industriellen Automatisierungsanordnungen. Ge-plante Erhöhungen der Energieversorgung werden hinsichtlich ihrer Zulässigkeit überprüft und als Quittierungsmeldungen kommuniziert.

Neben der Forderung, die gesamte Energieaufnahme einer Automatisierungsanordnung zu verringern, beispielsweise durch Energiesparmaßnahmen, ist es wünschenswert, die sog. Spitzenlast zu verringern, also die in einem Betrachtungszeitraum maximale Energieaufnahme. Der Grund besteht unter anderem darin, dass die Tarifmodelle von Energieversorgern im industriellen Bereich höhere Tarife für die in Spitzenlast bezogene elektrische Energie berechnen, als für eine gleichbleibende "Grundlast". Ein weiterer Grund besteht darin, dass die für die Energieverteilung und Energieversorgung verwendeten technischen Einrichtungen innerhalb ihrer Betriebsgrenzen betrieben werden müssen, so dass Spitzenlasten, die diese Betriebsgrenzen überschreiten, unbedingt vermieden werden müssen. Es daher üblich, in industriellen Automatisierungsanordnungen beim Auftreten einer Spitzenlast-Situation solche Automatisierungskomponenten und damit solche "Verbraucher" temporär abzuschalten, bei denen eine temporäre Abschaltung keinen negativen Einfluss auf die industrielle Fertigung, den industriellen Produktionsprozess o.ä. hat, oder zumindest kein Sicherheitsrisiko darstellt. Diese Strategie wird auch als "spitzenlastgesteuerter Lastabwurf" bezeichnet. So können beispielsweise elektrische Heizungen, die ein Medium in einem Vorratsbehälter auf einer bestimmten Temperatur halten sollen, so lange abgeschaltet werden, so lange die Temperatur des Mediums nicht auf oder unter einen Mindestwert gesunken ist. Ein anderes Beispiel betrifft Pumpen für das Befüllen von Vorratsbehältern, die temporär so lange abgeschaltet werden können oder in ihrer Förderleistung zurückgefahren können, so lange der Füllstand des Vorratsbehälters nicht auf einen Minimalwert abgesunken ist. Entsprechendes gilt für Abwasserpumpen etc..

Das temporäre Abschalten bzw. "Herunterregeln" der Automatisierungskomponenten bzw. der damit gesteuerten Einrichtungen geschieht dabei entweder manuell, oder automatisiert durch eine Steuerungseinrichtung. Im Falle der manuellen Steuerung ergibt sich der Nachteil, dass die steuernde Person eine genaue Kenntnis über die Betriebsgrenzen (beispielsweise minimale Füllstände, minimale Temperaturen etc.), den derzeitigen Betriebszustand (z.B. Füllstand, Temperatur) und die möglichen Betriebszustände (Ein, Aus, Standby, Teillast, Volllast) und die damit jeweils verbundene Energieaufnahme der einzelnen Automatisierungskomponenten haben muss. Diese Angaben müssen von der Bedienperson mit einem Status der gesamten Automatisierungsanordnung, zumeist der aktuellen gesamten Energieaufnahme, und damit verbundene Betriebsgrenzen (z.B. erlaubte spitzenlast) in Bezug gesetzt werden, was eine hohe Anforderung an die Kenntnis des zu steuernden Prozesses insgesamt und der einzelnen Teil-Prozesse und der damit verbundenen Automatisierungskomponenten stellt. Analoge Anforderungen werden auch an eine automatische Steuerung gestellt, die ebenfalls sowohl die Zustände und Betriebsgrenzen der einzelnen Automatisierungskomponenten, als auch die Zustände und Betriebsgrenzen des zu steuernden Gesamt-Prozesses und damit der gesamten industriellen Automatisierungsanordnung berücksichtigen muss. Aufgrund der Komplexität des Prozesswissens und aufgrund der Tatsache, dass häufig einzelne Automatisierungskomponenten und einzelne Teil-Prozesse geändert werden, ergibt sich nicht nur eine hohe Komplexität dieser Steuerungsaufgabe, sondern auch eine ungewünschte Fehlerhäufigkeit.

Es ist also eine Aufgabe der vorliegenden Erfindung, das Energiemanagement für industrielle Automatisierungsanordnungen zu vereinfachen und im Falle von geänderten Automatisierungskomponenten und Teil-Prozessen diese Änderungen sicher zu berücksichtigen.

Erfindungsgemäß wird dazu vorgeschlagen, das produktionstechnische Wissen über die Prozesse / Teilprozesse bzw. Anlagenteile in der jeweiligen steuernden Automatisierungskomponente selbst vorzuhalten (zu "kapseln") und auf die Automatisierungskomponente zum Zwecke einer Lastreduzierung über eine standardisierte Schnittstelle zuzugreifen. Anhand eines standardisierten Protokolls und dermaßen gestalteter Anfrage-, Quittierungs- und Statusmeldungen kann damit eine übergeordnete Instanz, beispielsweise die zentrale Steuerungskomponente oder ein Energiemanagementsystem, mit den einzelnen Automatisierungskomponenten den weiteren Betriebszustand jeweils "aushandeln".

Die Aufgabe wird insbesondere durch eine Automatisierungskomponente gemäß dem unabhängigen Patentanspruch 1 und durch ein Verfahren gemäß dem unabhängigen Patentanspruch 11 gelöst.

Die Lösung der Aufgabe sieht eine Automatisierungskomponente für eine industrielle Automatisierungsanordnung vor, wobei diese Automatisierungskomponente mit zumindest einer Datenschnittstelle zur Eingabe von Steuerungsbefehlen und zur Ausgabe von Statusinformationen oder Quittierungsmeldungen ausgestattet ist. Die Automatisierungskomponente ist dabei für die Ansteuerung eines wechselweisen Betriebs von zumindest zwei verschiedenen Betriebszuständen eines von der Automatisierungskomponente gesteuerten Prozesses, Teil-Prozesses, Gerätes oder eines Anlagenteils eingerichtet, wobei sich die Betriebszustände hinsichtlich der jeweiligen Leistungs- bzw. Energieaufnahme, insbesondere an elektrischer Leistung, des von der Automatisierungskomponente gesteuerten Prozesses, Teil-Prozesses, Gerätes oder einer Anlage unterscheiden. Dabei ist die Automatisierungskomponente zum Empfang von Steuerungsbefehlen mit Anfragen über eine Umschaltung in einen der zumindest zwei verschiedenen Betriebszustände eingerichtet und zur Ausgabe von Quittierungsmeldungen als Reaktion auf die Anfragen ausgebildet. Weiter ist die Automatisierungskomponente zur Ausgabe von Statusmeldungen über den jeweils aktivierten der Betriebszustände eingerichtet. Durch eine derart ausgestaltete Automatisierungskomponente ist es möglich, diese in ein übergeordnetes Energiemanagementsystem einzubinden, wobei die für das Energiemanagement relevanten Informationen aus der Automatisierungskomponente ausgelesen werden können, indem die Quittierungsmeldungen ausgewertet werden, und wobei entsprechende Betriebszustände mittels der Übertragung von entsprechenden Steuerungsbefehlen für die Automatisierungskomponente bzw. die mit dieser Automatisierungskomponente verknüpften Prozesse oder Teil-Prozesse aktiviert bzw. umgeschaltet werden können. Die Automatisierungskomponente ist zum Empfang einer Anfrage über das Einschalten, das Ausschalten oder einen Teillastbetrieb als ein zu aktivierender Betriebszustand eingerichtet. Damit stehen die am häufigsten geforderten Betriebszustände zur Umschaltung bereit. Die Anfrage nach einem Teillastbetrieb umfasst dabei entweder eine Angabe über eine relative oder eine Angabe über eine absolute Reduzierung der Energieaufnahme des durch die Automatisierungskomponente gesteuerten Prozesses.

Die Aufgabe wird gleichfalls durch ein Verfahren zur Aktivierung eines aus einer Mehrzahl von aktivierbaren Betriebszuständen eines mittels einer Automatisierungskomponente gesteuerten Prozesses, Teil-Prozesses, Gerätes oder eines Anlagenteils einer industriellen Automatisierungsanordnung gelöst, wobei die Automatisierungskomponente in einem ersten Schritt von einer Verwaltungsinstanz eine Anfragemeldung für den Wechsel eines Betriebszustandes empfängt. Die Automatisierungskomponente ist dabei zum Empfang einer Anfrage über das Einschalten, das Ausschalten oder einen Teillastbetrieb als ein zu aktivierender Betriebszustand eingerichtet. Damit stehen die am häufigsten geforderten Betriebszustände zur Umschaltung bereit. Die Anfrage nach einem Teillastbetrieb umfasst dabei entweder eine Angabe über eine relative oder eine Angabe über eine absolute Reduzierung der Energieaufnahme des durch die Automatisierungskomponente gesteuerten Prozesses. In einem zweiten Schritt überprüft die Automatisierungskomponente den Status eines durch Sicht gesteuerten Anlagenteils, Prozesses oder Teil-Prozesses dahingehend, ob und wie lange die angeforderte Änderung, Aktivierung oder Umschaltung des Betriebszustandes durch vorgegebene Parametergrenzen des Anlagenteils, des Prozesses oder des Teilprozesses erlaubt ist. In einem dritten Schritt wird dann durch die Automatisierungskomponente dieses Überprüfungsergebnisses mittels einer Quittierungsmeldung an die Verwaltungsinstanz ausgegeben und je nach Überprüfungsergebnis die Umschaltung des Betriebszustandes in die Wege geleitet. Durch die Anwendung dieses Verfahrens wird sichergestellt, dass eine Automatisierungskomponente nur dann einen Befehl zur Umschaltung eines Betriebszustandes umsetzt, wenn sich die zu steuernde Anlage, der Prozess oder der Teil-Prozess solche Betriebsparameter aufweist, die dem Wechsel nicht entgegen stehen. Weiter wird sichergestellt, dass die übergeordnete Instanz über die Umsetzung oder Nicht-Umsetzung der Anfrage informiert wird. Insbesondere können damit durch die Automatisierungskomponente selbst einer übergeordneten Instanz Informationen darüber übermittelt werden, ob, wann und/oder wie lange eine geplante Umschaltung bzw. Aktivierung eines Betriebszustandes zum gegenwärtigen Zeitpunkt möglich ist.

Vorteilhafte Ausgestaltungen der erfindungsgemäßen Automatisierungskomponente sind durch die abhängigen Patentansprüche 2 bis 10 angegeben; deren Merkmale und Vorteile gelten sinngemäß auch für das erfindungsgemäße Verfahren. Weiterhin sind vorteilhafte Ausgestaltungen des erfindungsgemäßen Verfahrens in den abhängigen Patentansprüchen 14 und 15 angegeben, deren Merkmale und Vorteile sinngemäß auch für die erfindungsgemäße Automatisierungskomponente gelten.

Quittierungsmeldungen der Automatisierungskomponente geben vorteilhaft einer übergeordneten Instanz Auskunft darüber, ob die Anfrage in eine Änderung der Betriebszustandes umgesetzt wurde, oder nicht. Dabei sind auch Quittierungen derart möglich, dass eine Umschaltung in die Wege geleitet, aber noch nicht vollzogen ist; dabei wird vorteilhaft die Zeitdauer bis zur Umschaltung mit der Quittierungsmeldung übertragen. Optional kann die Quittierungsmeldung auch eine Angabe darüber enthalten, wie lange der nun aktivierte Betriebszustand aufrecht erhalten kann, bis ein Wechsel in ein anderen, meist den vorhergehende, Betriebszustand automatisch vorgenommen wird bzw. vorgenommen werden muss, sofern definierte Betriebs- oder Prozessgrenzen nicht verletzt werden sollen.

Insbesondere zur Initialisierung eines Umschaltvorganges, aber auch zur allgemeinen Kontrollzwecken ist es vorteilhaft, wenn die Automatisierungskomponente zur Aussendung einer Statusmeldung über den jeweils aktivierten Betriebszustand ausgebildet ist. Vorteilhaft wird eine solche Statusmeldung automatisch nach jedem Wechsel des Betriebszustandes ausgesendet.

Eine große Flexibilität hinsichtlich des Energiemanagements einer Automatisierungsanordnung ergibt sich, wenn gesteuert durch die Automatisierungskomponente ein Betriebszustand mit einer maximalen Reduzierung der Energieaufnahme aktivierbar ist. Dabei ist es von Vorteil für ein Energiemanagementsystem, wenn die Automatisierungskomponente zur Aussendung einer Quittierungs- oder Statusmeldung über die durch die maximale Reduzierung der Energieaufnahme realisierbar relative oder absolute Reduzierung der Energieaufnahme und/oder einer Angabe über die maximale Zeitdauer bis zur Rückkehr von diesem Betriebszustand zu einem vorhergehenden Betriebszustand eingerichtet ist.

Eine übergeordnete Instanz, beispielsweise ein Energiemanagementsystem, kann neu eingeschaltete oder neu der Automatisierungsanordnung hinzugefügte Anlagenteile und deren Automatisierungskomponenten in das Energiemanagement einbeziehen, wenn die Automatisierungskomponente zur Aussendung einer Statusmeldung mit einer Liste aller derzeit verfügbarer und/oder aller überhaupt vorgesehenen Betriebszustände eingerichtet ist. Vorteilhaft sind in dieser Liste auch die jeweiligen Werte für die Energieaufnahme oder zumindest prozentuale (relative) Werte für den jeweiligen Energieverbrauch dabei angegeben.

Insbesondere in Automatisierungsanordnungen mit Automatisierungskomponenten unterschiedlicher Hersteller ist es von Vorteil, wenn die Automatisierungskomponente zur Verarbeitung bzw. Ausgabe der Anfragemeldungen, Quittierungsmeldungen und Statusmeldungen sowie der Steuerungsbefehle in einem standardisierten Protokoll eingerichtet ist. Eine auf den zu steuernden Prozess bzw. auf die zu Steuernde Anlage abgestimmte Umschaltung der Betriebszustände wird erleichtert, wenn die Automatisierungskomponente zur Erfassung und/oder Speicherung von Informationen über den Anlagenteil, den Prozess oder den Teil-Prozess eingerichtet ist, wobei die Automatisierungskomponente zur Verwendung dieser Informationen über eine Entscheidung darüber, ob und wie lange einer oder mehrer der Betriebszustände aktiviert werden darf, eingerichtet ist. Damit wird in der Automatisierungskomponente das Prozesswissen über die nachgelagerten Prozesse (Teilprozess, Geräte, etc.) gekapselt, so dass eine übergeordnete Instanz (z.B. Energiemanagementsystem) auch ohne eine solches Prozesswissen und allein anhand des Austausches von Meldungen mit der Automatisierungskomponente angepasste Steuerungsbefehle generieren und übermitteln kann. Der Meldungsaustausch zwischen einer übergeordneten Instanz und der Automatisierungskomponente geschieht vorteilhaft durch kurze Meldungen, in den für jede der standardisierten Betriebszustände einzelne Bits ("Flags") reserviert sind.

Ausführungsbeispiele der erfindungsgemäßen Automatisierungskomponente werden nachfolgend anhand der Zeichnungen erläutert. Sie dienen gleichzeitig der Erläuterung eines erfindungsgemäßen Verfahrens.

Dabei zeigen:
- Figur 1: in schematischer Darstellung eine Automatisierungsanordnung mit einer Energieversorgung, einem Energiemanagement, einer Planungsinstanz und Teilprozessen,
- Figur 2: in schematischer Darstellung den beispielhaften Aufbau von Meldungen mit Anfragen, Quittierungsmeldungen und Statusmeldungen,
- Figur 3: eine beispielhafte Erläuterung von verschiedenen Bits ("Flags") in den Meldungen, und

- Figur 4: eine Planungstabelle der Planungsinstanz.

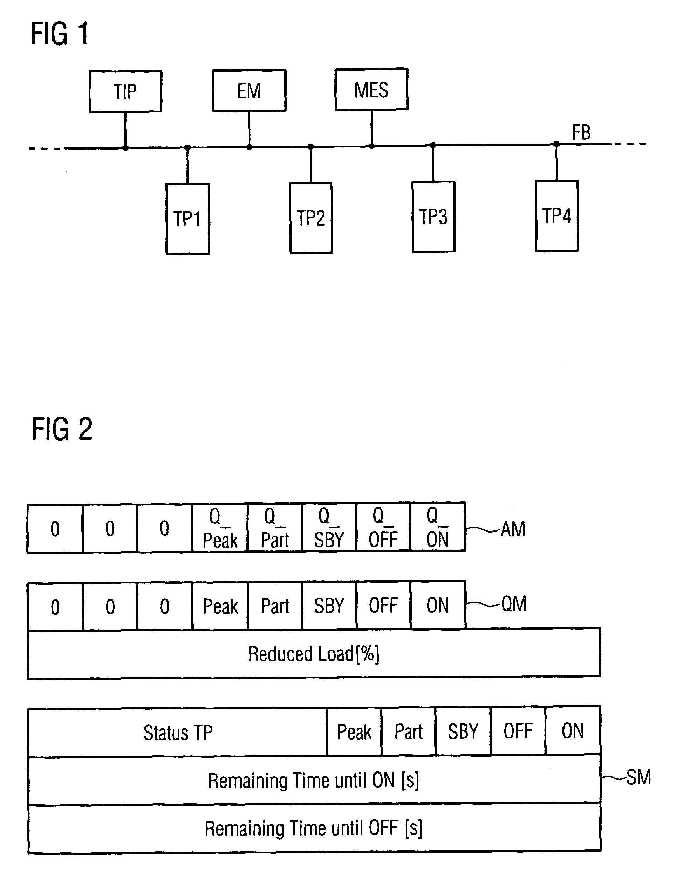

In der Figur 1 ist als industrielle Automatisierungsanordnung eine Produktionsanlage schematisch dargestellt, in der über ein Datennetz FB (Feldbussystem) Automatisierungskomponenten TP1, ..., TP4 (Teilprozesse) angeordnet sind, wobei die Automatisierungskomponenten TP1, ..., TP4 jeweils einen zu steuernden Teilprozess repräsentieren. Dies bedeutet, dass der jeweilige Teilprozess durch die jeweilige Automatisierungskomponente TP1, ..., TP4 gesteuert wird. Weiter sind mittels des Datennetzes FB und mittels nicht dargestellter Infrastruktur (beispielsweise Energieversorgungsleitungen) die Energieversorgung TIP ("Totally Integrated Power"), eine Einrichtung zum Energiemanagement EM und eine Planungsinstanz MES ("Manufacturing Execution System") in die Automatisierungsanordnung integriert. Dabei enthält umfasst die Einrichtung zum Energiemanagement EM eine Steuerungskomponente zum meldungsbasierten Austausch von Steuerungs- und Zustandsdaten, die die Einstellungen eines in den Automatisierungskomponenten TP1, ..., TP4 jeweils integrierten Energiesparprofil betreffen. Dieses Energiesparprofil kann als ein Satz unterschiedlicher und vorzugsweise standardisierter Betriebszustände betrachtet werden, wobei die Standardisierung im vorliegenden Ausführungsbeispiel sowohl die Betriebszustände selbst, als auch die diese betreffende meldungs- oder register-basierte Steuerung betrifft. Dabei kann die (nicht dargestellte) Steuerungskomponente wie im vorliegenden Ausführungsbeispiel als Software oder als Software-Plug-In innerhalb der Einrichtung zum Energiemanagement EM, alternativ aber auch in anderen Komponenten integriert sein, insbesondere in der Energieversorgung TIP oder in der Planungsinstanz MES.

Im Folgenden soll exemplarisch angenommen werden, dass die Automatisierungskomponente TP1 als einen Teilprozess einen Kompressor steuert, welcher einen für die Produktionsanlage wichtigen Druckluft-Vorratsbehälter befüllt. Dabei soll mittels der steuerungseigenschaften der Automatisierungskomponente TP1 der Druck dieses Vorratsbehälters zwischen einem Minimalwert und einem Maximalwert gehalten werden. Dazu ist der Kompressor in seiner Drehzahl steuerbar, so dass dessen Pumpleistung und somit auch dessen Energieaufnahme (Aufnahme an elektrischer Leistung von der Energieversorgung TIP) stufenlos geregelt werden kann.

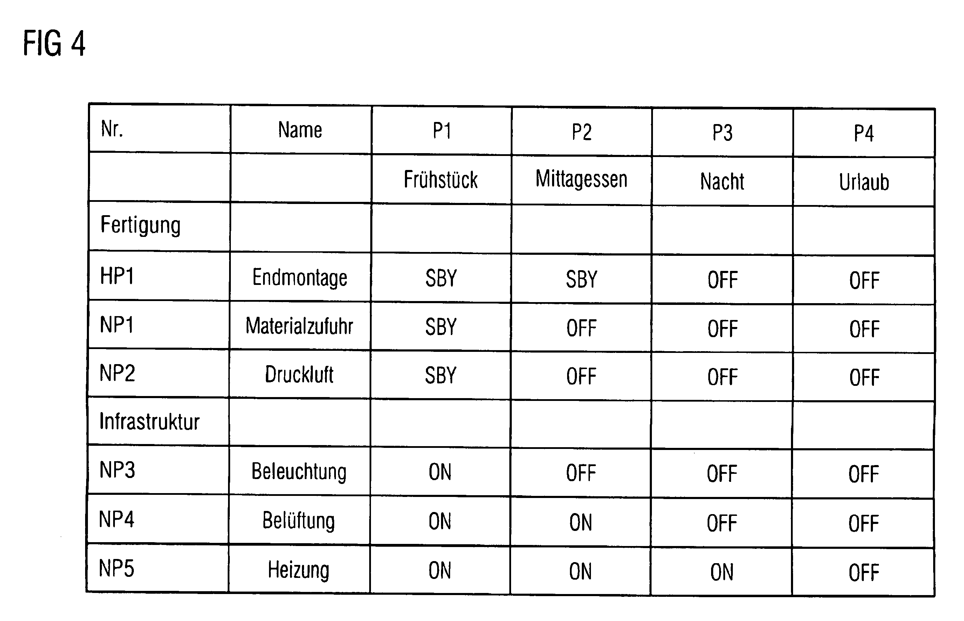

Die Energieversorgung TIP überwacht kontinuierlich die von der gesamten Produktionsanlage aufgenommene elektrische Leistung und stellt diesen Wert kontinuierlich über das Datennetz FB dem Energiemanagement EM und damit dem Plug-In mit der Steuerungskomponente zur Verfügung. Weiterhin wird das Energiemanagement EM ebenfalls über das Datennetz FB von der Planungsinstanz MES mit Plandaten über eine Fertigung des Produktionsanlage versorgt; solche Plandaten sind exemplarisch in der Figur 4 dargestellt.

Alternativ kann auch die Energieaufnahme weniger oder auch nur eines einzigen Teilprozesses betrachtet werden; dies setzt das Vorhandensein entsprechend differenzierter Messeinrichtungen voraus. In einem weiteren alternativen Ausführungsbeispiel kann die derzeitige, die minimale und/oder die maximale Energieaufnahme eines Teilprozesses auch mittels Abfragemeldungen aus der entsprechenden Automatisierungskomponente TP1, ..., TP4 ausgelesen werden; dadurch können Messmittel eingespart werden.

Das Energiemanagement EM ist derart ausgestaltet, dass in den Fällen, in denen sich die aufgenommene elektrische Leistung der Produktionsanlage oder der betrachteten Teil-Produktionsanlage einem ersten Grenzwert nähert oder diesen überschreitet, solche Prozesse und Teilprozesse in ihrer Leistung heruntergeregelt werden sollen, die nicht ständig mit einer gleichmäßigen Last betrieben werden müssen. Dies ist bei dem Kompressor der Fall, welcher durch die Automatisierungskomponente TP1 gesteuert wird. Sofern der Druck in dessen Vorratsbehälter oberhalb des Minimaldrucks liegt, kann die Förderleistung des Kompressors und damit dessen Energieaufnahme gesenkt oder sogar ganz abgeschaltet werden. Um dies zu erreichen, kommuniziert das Energiemanagement EM mit der Automatisierungskomponente TP1 mittels eines standardisierten Protokolls. Dazu versendet das Energiemanagement EM eine standardisierte Meldung, nämlich die Anfragemeldung AM zu der Automatisierungskomponente TP1,

In der Figur 2 ist der Aufbau der Anforderungsmeldungen AM, der Quittierungsmeldungen QM und der Statusmeldungen SM schematisch dargestellt. Im einfachsten Fall umfasst die Payload der Anfragemeldung AM nur ein Byte, in welchem das Bit mit der Bezeichnung "Q_Part" die Automatisierungskomponente TP1 bzw. den dadurch gesteuerten Teilprozess in einen Betriebszustand wechseln lassen soll, welcher einem Teillastbetrieb ("part") entspricht. Die Anfragemeldung AM kann optional (nicht dargestellt) noch zwei weitere Bytes umfassen, welche einen Prozentwert für die angestrebte Lastreduzierung angeben; alternativ kann auch mit Absolutwerten gearbeitet werden. Die Automatisierungskomponente TP1 antwortet mit einer Quittierungsmeldung QM, welche ebenfalls in der Figur 2 schematisch dargestellt ist und welche vorzugsweise ebenfalls durch das Setzen einzelner Bits in standardisierter Weise Auskunft über die Umsetzung oder Nicht-Umsetzung der Anfragemeldung AM gibt. Im vorliegenden Fall ist in dieser Quittierungsmeldung QM das vierte Bit "Part" gesetzt, wodurch die Automatisierungskomponente TP1 die Umschaltung in den Teillastbetrieb des Kompressors bestätigt. In zwei weiteren Bytes gibt die Quittierungsmeldungen QM auch noch Auskunft darüber, um welchen Prozentsatz die aufgenommene Leistung reduziert werden konnte, beispielsweise 50%. Weiterhin können mit der Quittierungsmeldung QM oder, wie hier, mit einer separaten Statusmeldung SM zeitliche Angaben über die Umschaltung gemacht werden. So ist die Zeitdauer bis zur Umschaltung ("remaining time until on") im vorliegenden Fall zu Null gesetzt, weil die Umschaltung bereits stattgefunden hat. Bei der Rückfallzeit ("remaining time until off") handelt es sich um diejenige von der Automatisierungskomponente TP1 prognostizierte Zeit, die bis zum erneuten Wechsel des Betriebszustandes (hier: in den Volllastbetrieb) verstreichen wird. Dazu überprüft die Automatisierungskomponente TP1 nicht nur vor dem Umschalten in den Teillastbetrieb, ob der Druck des Druckbehälters oberhalb der minimalen Grenze liegt, sondern betrachtet auch den Druckgradienten (Druckabfall pro Zeiteinheit), um das Erreichen des Minimaldrucks bei der derzeitigen reduzierten Förderleistung des Kompressors zu errechnen. Durch diese Maßnahmen wird verhindert, dass die von dem Energiemanagement EM geforderte Reduzierung der Energieaufnahme des Teilprozesses zu einem nichtgewollten Zustand (hier: Minderdruck) führt.

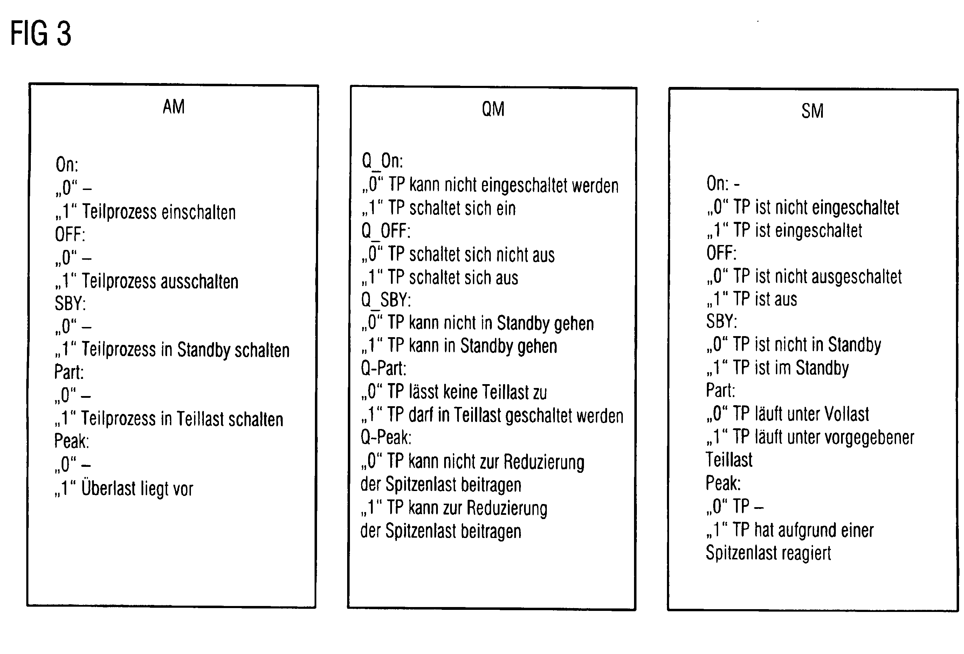

Die Bedeutungen der einzelnen Bits in den Meldungen sind in der Figur 3 tabellarisch dargestellt. Selbstverständlich können auch andere Konventionen über den Meldungsaustausch, insbesondere auch text- oder variablengestützte Anweisungen, vereinbart sein. Insbesondere muss der Informationstransport zwischen dem Energiemanagement EM und dem Automatisierungskomponenten TP1, ..., TP4 gar nicht mittels Meldungen geschehen, sondern es können auch in einer gemeinsamen Datenbank oder in einem sonstigen Informationsspeicher die entsprechenden Datenworte (Bytes) jeweils zugreifbar bzw. zumindest lesbar gespeichert sein. Dies gilt insbesondere für sog. "globale Variablen" des Produktionsprozesses.

Anstelle der beschriebenen prozentualen Lastangaben können, insbesondere für die "eingesparte elektrische Leistung, auch absolute Werte, beispielsweise in der Einheit "Kilowatt", verwendet werden.

In der Figur 4 ist exemplarisch eine tabellarische Produktplanung der Planungsinstanz MES dargestellt. Vorteilhaft werden solche Plandaten von dem Energiemanagement EM dazu verwendet, eine Priorisierung bei der Übermittlung von Anfragemeldungen AM vorzunehmen. Das heißt, dass nicht nur die starren Vorgaben aus diesen Tabellen (beispielsweise das Abschalten einer Beleuchtung in Betriebspausen) mittels der durch das Energiemanagement EM versendeten Anfragemeldung AM realisiert wird, sondern auch, dass beispielsweise in Betriebspausen, in denen die gesamte Aufnahme an elektrischer Leistung ohnehin gering ist, solche Prozesse wie der exemplarisch betrachtete Druckspeicher in den Betriebszustand "Volllast" umgeschaltet werden, um nach der Betriebspause mit maximalem Vorrat an Druckluft wiederum zu einer Entlastung der Energieversorgung TIP bereit zu stehen. Dadurch, dass durch das Energiemanagement EM eine Vielzahl von Automatisierungskomponenten TP1, ..., TP4 und die damit verbundenen Teilprozesse gesteuert werden können, kann das Energiemanagement EM zielgenau und global die Einsparung der notwendigen Energieaufnahme aushandeln bzw. zu einer zeitlichen Nivellierung der Energieaufnahme beitragen. Dazu trägt insbesondere der Betriebszustand "Überlast" ("Peak") bei, bei dem die jeweilige Automatisierungskomponente zum sofortigen "Abwurf" einer maximalen Last aufgefordert wird. Im Falle dies exemplarisch betrachteten Kompressors heißt dass, diesen solange vollständig abzuschalten, bis ein Minimaldruck erreicht worden ist.

Vorteilhaft ist die Automatisierungskomponente TP1, ..., TP4 dazu eingereichtet, mittels einer speziellen Statusmeldung SM eine (in den Figuren nicht dargestellte) Liste mit allen verfügbaren Betriebszuständen (hier: ein, aus, Standby, Teillast, Vollast) zu übermitteln, wobei optional diese Liste jeweils Zeitangaben über eine durchschnittliche Reaktionszeit, die zur Einschaltung des jeweiligen Betriebszustandes benötigt wird, umfasst. Damit können insbesondere neu in die Produktionsanlage integrierte Einrichtungen automatisch durch das Energiemanagement EM berücksichtigt werden. Statusmeldungen SM können entweder auf Anfrage übermittelt werden, oder aber selbsttätig durch die jeweilige Automatisierungskomponente TP1, ..., TP4. Die selbsttätige Übertragung findet insbesondere dann statt, wenn sich ein Betriebszustand der jeweiligen Automatisierungskomponente TP1, ..., TP4 geändert hat. Auch eine selbsttätige Übertragung in festgelegten zeitlichen Abständen ist dabei einstellbar.

## Patentansprüche

1. Automatisierungskomponente (TP1, ... TP4) für eine industrielle Automatisierungsanordnung,
wobei die Automatisierungskomponente (TP1, ..., TP4) zur Steuerung zumindest eines Anlagenteils oder Prozesses oder Teilprozesses der industriellen Automatisierungsanordnung eingerichtet ist,
wobei für den zumindest einen Anlagenteil, Prozess- oder Teilprozess zumindest zwei verschiedene Betriebszustände wechselweise einstellbar sind, und
wobei die Betriebszustände sich hinsichtlich der jeweiligen Leistungsaufnahme des Anlagenteils, Prozesses oder Teilprozesses unterscheiden,
wobei
• die Automatisierungskomponente (TP1, ..., TP4) zum Empfang von Anfragen über eine Umschaltung in einen der zumindest zwei verschiedenen Betriebszustände eingerichtet ist, und
• die Automatisierungskomponente (TP1, ..., TP4) zum Wechsel des Betriebszustandes eingerichtet ist,
**dadurch gekennzeichnet, dass**
• die umzuschaltenden Betriebszustände zumindest das Einschalten, das Ausschalten oder einen Teillastbetrieb des Anlagenteils oder Prozesses oder Teilprozesses umfassen, wobei die Anfrage nach einem Teillastbetrieb eine Angabe über eine relative oder eine absolute Reduzierung der Energieaufnahme umfasst,
• die Automatisierungskomponente (TP1, ..., TP4) zur Überprüfung, ob die angeforderte Änderung des Betriebszustandes durch vorgegebene Parametergrenzen des Anlagenteils, des Prozesses oder des Teilprozesses erlaubt ist, und zur Ausgabe von dem Überprüfungsergebnis entsprechenden Quittierungsmeldungen (QM) als Reaktion auf die Anfragen ausgebildet ist, und
• die Automatisierungskomponente (TP1, ..., TP4) zur Ausgabe von Statusmeldungen (SM) über den jeweils aktivierten der Betriebszustände vorgesehen ist.

2. Automatisierungskomponente (TP1, ..., TP4) nach Patentanspruch 1,
**dadurch gekennzeichnet,**
**dass** die Automatisierungskomponente (TP1, ..., TP4) dazu eingerichtet ist, als Reaktion auf die Anfrage eine Entscheidung darüber zu treffen, ob die geforderte Umschaltung umsetzbar ist, ,
wobei die Automatisierungskomponente (TP1, ..., TP4) derart eingestellt ist, dass in dem Fall, in dem die Umschaltung möglich ist, die Umschaltung vorgenommen und eine positive Quittierungsmeldung (QM) ausgegeben wird, und anderenfalls eine negative Quittierungsmeldung (QM) ausgegeben wird.

3. Automatisierungskomponente (TP1, ..., TP4) nach einem der vorhergehenden Patentansprüche,
**dadurch gekennzeichnet,**
**dass** einer der umzuschaltenden Betriebszustände ein Betriebszustand mit einer jeweils maximalen Reduzierung der Energieaufnahme ist.

4. Automatisierungskomponente (TP1, ..., TP4) nach einem Patentansprüche 2 oder 3,
**dadurch gekennzeichnet,**
**dass** die Quittierungsmeldung (QM) eine Angabe darüber umfasst, wann die durch die Anfrage angeforderte Umschaltung des Betriebszustandes oder Aktivierung des Betriebszustandes umgesetzt wird.

5. Automatisierungskomponente (TP1, ..., TP4) nach einem der Patentansprüche 2 bis 4,
**dadurch gekennzeichnet,**
**dass** die Quittierungsmeldung (QM) eine Angabe über eine maximal mögliche Zeitdauer des durch die Anfragemeldung angeforderten Betriebszustandes umfasst.

6. Automatisierungskomponente (TP1, ..., TP4) nach einem der Patentansprüche 3 bis 5,
**dadurch gekennzeichnet,**
**dass** die Automatisierungskomponente (TP1, ..., TP4) zur Aussendung einer Statusmeldung (SM) über die durch die maximale Reduzierung der Energieaufnahme realisierbare relative oder absolute Reduzierung der Energieaufnahme eingerichtet ist.

7. Automatisierungskomponente (TP1, ..., TP4) nach einem der vorhergehenden Patentansprüche,
**dadurch gekennzeichnet,**
**dass** die Automatisierungskomponente (TP1, ..., TP4) zur Aussendung einer Informationsmeldung mit einer Liste aller derzeit verfügbarer und/oder aller überhaupt vorgesehenen Betriebszustände eingerichtet ist.

8. Automatisierungskomponente (TP1, ..., TP4) nach einem der vorhergehenden Patentansprüche,
**dadurch gekennzeichnet,**
**dass** die Automatisierungskomponente (TP1, ..., TP4) zur Auswertung eingehender Anfragemeldungen und zur Ausgabe von Quittierungs- und Statusmeldungen (SM) anhand eines standardisierten Protokolls eingerichtet ist.

9. Automatisierungskomponente (TP1, ..., TP4) nach Patentanspruch 8,
**dadurch gekennzeichnet,**
**dass** das standardisierte Protokoll für jeden der Betriebszustände zumindest ein reserviertes Bit in einem Datenwort vorsieht.

10. Automatisierungskomponente (TP1, ..., TP4) nach einem der vorhergehenden Patentansprüche,
**dadurch gekennzeichnet,**
**dass** die Automatisierungskomponente (TP1, ..., TP4) zur Erfassung und/oder Speicherung von Informationen über den Anlagenteil, dem Prozess oder Teilprozess eingerichtet ist, wobei die Automatisierungskomponente (TP1, ..., TP4) zur Verwendung dieser Informationen für eine Entscheidung darüber, ob und wie lange einer oder mehrere der Betriebszustände aktiviert werden darf, eingerichtet ist.

11. Verfahren zur Aktivierung eines aus einer Mehrzahl von aktivierbaren Betriebszuständen eines durch eine Automatisierungskomponente (TP1, ..., TP4) gesteuerten Anlagenteils oder Prozesses oder Teilprozesses in einer industriellen Automatisierungsanordnung,
**dadurch gekennzeichnet, dass**
- die Automatisierungskomponente (TP1, ..., TP4) in einem ersten Schritt von einer Verwaltungsinstanz eine Anfragemeldung für den Wechsel eines Betriebszustandes empfängt, wobei die umzuschaltenden Betriebszustände zumindest das Einschalten, das Ausschalten oder einen Teillastbetrieb des Anlagenteils oder Prozesses oder Teilprozesses umfassen, wobei die Anfrage nach einem Teillastbetrieb eine Angabe über eine relative oder eine absolute Reduzierung der Energieaufnahme umfasst,
- in einem zweiten Schritt die Automatisierungskomponente (TP1, ..., TP4) den Status des durch sie gesteuerten Anlagenteils, Prozesses oder Teilprozesses dahingehend überprüft, ob die angeforderte Änderung des Betriebszustandes durch vorgegebene Parametergrenzen des Anlagenteils, des Prozesses oder des Teilprozesses erlaubt ist,
- in einem dritten Schritt durch die Automatisierungskomponente (TP1, ..., TP4) dieses Überprüfungsergebnis mittels einer Quittierungsmeldung (QM) an die Verwaltungsinstanz ausgegeben wird, und
- in einem vierten Schritt der geforderte Wechsel des Betriebszustandes durch die Automatisierungskomponente (TP1, ..., TP4) durchgeführt wird.

12. Verfahren nach Patentanspruch 11,
**dadurch gekennzeichnet,**
**dass** die Automatisierungskomponente (TP1, ..., TP4) in dem zweiten Schritt den Status eines durch sie gesteuerten Anlagenteils, Prozesses oder Teil-Prozesses dahingehend überprüft, wie lange die angeforderte Änderung des Betriebszustandes durch vorgegebene Parameter grenzendes Anlagenteils, des Prozesses oder des Teilprozesses erlaubt ist.

13. Verfahren nach einem der Patentansprüche 11 oder 12,
**dadurch gekennzeichnet,**
**dass** in dem zweiten Schritt die Automatisierungskomponente (TP1, ..., TP4) den Status eines durch sie gesteuerten Anlagenteils, Prozesses oder Teilprozesses dahingehend überprüft, wie viel Zeit für die angeforderte Änderung des Betriebszustandes erforderlich ist.

## Claims

1. Automation component (TP1, ..., TP4) for an industrial automation arrangement,
the automation component (TP1, ..., TP4) being set up to control at least one system part or process or subprocess of the industrial automation arrangement,
at least two different operating states being able to be alternately set for the at least one system part, process or subprocess, and
the operating states differing with respect to the respective power consumption of the system part, process or subprocess,
• the automation component (TP1, ..., TP4) being set up to receive requests to change over to one of the at least two different operating states, and
• the automation component (TP1, ..., TP4) being set up to change the operating state,
**characterized in that**
the operating states to be changed over include at least the switching-on, the switching-off or partial load operation of the system part or process or subprocess the request for partial load operation including a statement relating to a relative or absolute reduction in the energy consumption, the automation component (TP1, ..., TP4) is designed to check whether the requested change of the operating state is permitted by predefined parameter limits of the system part, process or subprocess and to output acknowledgement messages (QM) corresponding to the checking result in response to the requests, and
• the automation component (TP1, ..., TP4) is intended to output status messages (SM) relating to the respectively activated operating state of the operating states.

2. Automation component (TP1, ..., TP4) according to Patent Claim 1,
**characterized in that**
the automation component (TP1, ..., TP4) is set up to decide, in response to the request, whether the required changeover can be implemented,
the automation component (TP1, ..., TP4) being set up in such a manner that the changeover is carried out and a positive acknowledgement message (QM) is output in the case in which the changeover is possible and otherwise a negative acknowledgement message (QM) is output.

3. Automation component (TP1, ..., TP4) according to one of the preceding patent claims,
**characterized in that**
one of the operating states which can be changed over is an operating state with a respective maximum reduction in the energy consumption.

4. Automation component (TP1, ..., TP4) according to either of Patent Claims 2 and 3,
**characterized in that**
the acknowledgement message (QM) includes a statement relating to when the operating state is changed over, as requested by the request, or the operating state is activated.

5. Automation component (TP1, ..., TP4) according to one of Patent Claims 2 to 4,
**characterized in that**
the acknowledgement message (QM) includes a statement relating to a maximum possible duration of the operating state requested by the request message.

6. Automation component (TP1, ..., TP4) according to one of Patent Claims 3 to 5,
**characterized in that**
the automation component (TP1, ..., TP4) is set up to emit a status message (SM) relating to the relative or absolute reduction in the energy consumption which can be realized by means of the maximum reduction in the energy consumption.

7. Automation component (TP1, ..., TP4) according to one of the preceding patent claims,
**characterized in that**
the automation component (TP1, ..., TP4) is set up to emit an information message containing a list of all currently available operating states and/or all operating states which are actually provided.

8. Automation component (TP1, ..., TP4) according to one of the preceding patent claims,
**characterized in that**
the automation component (TP1, ..., TP4) is set up to evaluate incoming request messages and to output acknowledgement and status messages (SM) using a standardized protocol.

9. Automation component (TP1, ..., TP4) according to Patent Claim 8,
**characterized in that**
the standardized protocol provides at least one reserved bit in a data word for each of the operating states.

10. Automation component (TP1, ..., TP4) according to one of the preceding patent claims,
**characterized in that**
the automation component (TP1, ..., TP4) is set up to acquire and/or store information relating to the system part, the process or subprocess, the automation component (TP1, ..., TP4) being set up to use this information to decide whether and for how long one or more of the operating states may be activated.

11. Method for activating one of a plurality of activatable operating states of a system part or process or subprocess controlled by an automation component (TP1, ..., TP4) in an industrial automation arrangement,
**characterized in that**,
- in a first step, the automation component (TP1, ..., TP4) receives a request message to change an operating state from a management entity, the operating states to be changed over including at least the switching-on, the switching-off or partial load operation of the system part or process or subprocess, the request for partial load operation including a statement relating to a relative or absolute reduction in the energy consumption,
- in a second step, the automation component (TP1, ..., TP4) checks the status of the system part, process or subprocess controlled by it in order to determine whether the requested change of the operating state is permitted by predefined parameter limits of the system part, process or subprocess,
- in a third step, the automation component (TP1, ..., TP4) outputs this checking result to the management entity using an acknowledgement message (QM), and,
- in a fourth step, the required change of the operating state is carried out by the automation component (TP1, ... , TP4).

12. Method according to Patent Claim 11,
**characterized in that**,
in the second step, the automation component (TP1, ..., TP4) checks the status of a system part, process or subprocess controlled by it in order to determine for how long the requested change of the operating state is permitted by predefined parameter limits of the system part, process or subprocess.

13. Method according to either of Patent Claims 11 and 12,
**characterized in that**,
in the second step, the automation component (TP1, ..., TP4) checks the status of a system part, process or subprocess controlled by it in order to determine how much time is required for the requested change of the operating state.

## Revendications

1. Elément ( TP1, ..., TP4 ) d'automatisation pour une installation d'automatisation industrielle,
dans lequel l'élément ( TP1, ..., TP4 ) d'automatisation est conçu pour la commande d'au moins une partie de système ou d'un procédé ou d'une partie de procédé de l'installation d'automatisation industrielle,
dans lequel, pour la au moins une partie de système, le procédé ou la partie de procédé, au moins deux états de fonctionnement différents peuvent être établis en alternance, et dans lequel les états de fonctionnement se distinguent en ce qui concerne l'absorption respective de puissance de la partie du système, du procédé ou de la partie de procédé,
dans lequel
• l'élément ( TP1, ..., TP4 ) d'automatisation est conçu pour la réception de demandes par l'intermédiaire d'une commutation dans l'un des au moins deux états de fonctionnement différents, et
• l'élément ( TP1, ..., TP4 ) d'automatisation est conçu pour changer l'état de fonctionnement,
**caractérisé en ce que**
• les états de fonctionnement à commuter comprennent au moins la connexion, la déconnexion ou un fonctionnement en charge partielle de la partie du système ou du procédé ou de la partie de procédé, la demande d'un fonctionnement en charge partielle comprenant une demande d'une réduction relative ou d'une réduction absolue de l'absorption d'énergie,
• l'élément ( TP1, ..., TP4 ) d'automatisation est constitué pour le contrôle du point de savoir si la modification demandée de l'état de fonctionnement est autorisée par des limites de paramètre prescrites de la partie du système, du procédé ou de la partie de procédé et pour l'émission, en réaction aux demandes, de messages ( QM ) d'accusé de réception correspondant à l'émission du résultat du contrôle, et
• l'élément ( TP1, ..., TP4 ) d'automatisation est prévu pour l'émission de messages ( SM ) d'état sur ceux des états de fonctionnement respectivement activés.

2. Elément ( TP1, ..., TP4 ) d'automatisation suivant la revendication 1,
**caractérisé**
**en ce que** l'élément ( TP1, ..., TP4 ) d'automatisation est conçu pour prendre, en réaction à la demande, une décision sur le point de savoir si la commutation demandée peut être réalisée, l'élément ( TP1, ..., TP4 ) d'automatisation étant réglé de manière à ce que, dans le cas où la commutation est possible, la commutation soit effectuée et un message ( QM ) positif d'accusé de réception soit émis et, sinon, un message ( QM ) négatif d'accusé de réception soit émis.

3. Elément ( TP1, ..., TP4 ) d'automatisation suivant l'une des revendications précédentes,
**caractérisé**
**en ce que** l'un des états de fonctionnement à commuter est un état de fonctionnement ayant une réduction maximum de l'absorption d'énergie.

4. Elément ( TP1, ..., TP4 ) d'automatisation suivant l'une des revendications 2 ou 3,
**caractérisé**
**en ce que** le message ( QM ) d'accusé de réception comprend une indication sur l'instant où la commutation de l'état de fonctionnement ou l'activation d'état de fonctionnement demandée par la demande est réalisée.

5. Elément ( TP1, ..., TP4 ) d'automatisation suivant l'une des revendications 2 à 4,
**caractérisé**
**en ce que** le message ( QM ) d'accusé de réception comprend une indication sur une durée maximum possible de l'état de fonctionnement demandée par le message de demande.

6. Elément ( TP1, ..., TP4 ) d'automatisation suivant l'une des revendications 3 à 5,
**caractérisé**
**en ce que** l'élément ( TP1, ..., TP4 ) d'automatisation est conçu pour l'émission d'un message ( SM ) d'état sur la réduction relative ou absolue de l'absorption d'énergie réalisable par la réduction maximum de l'absorption d'énergie.

7. Elément ( TP1, ..., TP4 ) d'automatisation suivant l'une des revendications précédentes,
**caractérisé**
**en ce que** l'élément ( TP1, ..., TP4 ) d'automatisation est conçu pour l'émission d'un message d'information ayant une liste de tous les états de fonctionnement disponibles actuellement et/ou du moins prévus.

8. Elément ( TP1, ..., TP4 ) d'automatisation suivant l'une des revendications précédentes,
**caractérisé**
**en ce que** l'élément ( TP1, ..., TP4 ) d'automatisation est conçu pour l'exploitation de messages de demande entrant et pour l'émission de messages ( SM ) d'accusé de réception et d'état au moyen d'un programme normalisé.

9. Elément ( TP1, ..., TP4 ) d'automatisation suivant la revendication 8,
**caractérisé**
**en ce que** le programme normalisé prévoit, pour chacun des états de fonctionnement, au moins un bit réservé dans un mot de données.

10. Elément ( TP1, ..., TP4 ) d'automatisation suivant l'une des revendications précédentes,
**caractérisé**
**en ce que** l'élément ( TP1, ..., TP4 ) d'automatisation est conçu pour la détection et/ou la mémorisation d'informations sur la partie de système, le procédé ou la partie de procédé, l'élément ( TP1, ..., TP4 ) d'automatisation étant conçu pour l'utilisation de ces informations afin de décider si et combien de temps on peut activer un ou plusieurs des états de fonctionnement.

11. Procédé d'activation d'une partie de système ou d'un procédé ou d'une partie de procédé dans une installation d'automatisation industrielle commandé par un élément ( TP1, ..., TP4 ) d'automatisation parmi une pluralité d'états de fonctionnement pouvant être activés,
**caractérisé en ce que**
- l'élément ( TP1, ..., TP4 ) d'automatisation reçoit, dans un premier stade d'une instance de gestion, un message de demande de changement d'un état de fonctionnement, les états de fonctionnement à commuter comprenant au moins la connexion, la déconnexion ou un fonctionnement en charge partielle de la partie de système ou du procédé ou de la partie de procédé, la demande d'un fonctionnement en charge partielle comprenant une indication sur une réduction relative ou une réduction absolue de l'absorption d'énergie,
- dans un deuxième stade, l'élément ( TP1, ..., TP4 ) d'automatisation contrôle l'état de la partie de système, du procédé ou de la partie de procédé qu'il commande sur le point de savoir si le changement demandé de l'état de fonctionnement est autorisé par des limites de paramètre prescrites de la partie du système, du procédé ou de la partie du procédé,
- dans un troisième stade, ce résultat de contrôle est, par l'élément ( TP1, ..., TP4 ) d'automatisation, envoyé à l'instance de gestion au moyen d'un message ( QM ) d'accusé de réception, et
- dans un quatrième stade, le changement demandé de l'état de fonctionnement est effectué par l'élément ( TP1, ..., TP4 ) d'automatisation.

12. Procédé suivant la revendication 11,
**caractérisé**
**en ce que** l'élément ( TP1, ..., TP4 ) d'automatisation contrôle, dans le deuxième stade, l'état d'une partie de système, du procédé ou d'une partie de procédé qu'il commande sur le point de savoir pendant combien de temps le changement de l'état demandé de l'état de fonctionnement est autorisé par des paramètres prescrits de la partie du système, du procédé ou de la partie du procédé limitant.

13. Procédé suivant l'une des revendications 11 ou 12,
**caractérisé**
**en ce que**, dans le deuxième stade, l'élément ( TP1, ..., TP4 ) d'automatisation contrôle l'état d'une partie du système du procédé ou d'une partie du procédé qu'il commande sur le point de savoir combien de temps est nécessaire pour le changement demandé de l'état de fonctionnement.
